# FASCICULE DE BREVET EUROPEEN

(11) **EP 3 395 089 B1**
(45) Date de publication et mention de la délivrance du brevet: **27.11.2019**
(21) Numéro de dépôt: 16826409.1
(22) Date de dépôt: 20.12.2016
(51) Int. Cl.: H04W 8/18, H04W 8/20, H04W 88/06

(54) **MODULE D'IDENTITE DE SOUSCRIPTEUR EMBARQUE COMPRENANT DES PROFILS DE COMMUNICATION.**
EINGEBETTETES TEILNEHMERIDENTITÄTSMODUL MIT KOMMUNIKATIONSPROFILEN
EMBEDDED SUBSCRIBER IDENTITY MODULE COMPRISING COMMUNICATION PROFILES

(30) Priorité: 22.12.2015 FR 1563129
(43) Date de publication de la demande: 31.10.2018
(73) Titulaire: IDEMIA France, 92700 Colombes (FR)
(72) Inventeur: DUMOULIN, Jérôme, 92700 Colombes (FR); WOZNIAK, Tomasz, 92700 Colombes (FR)
(74) Mandataire: Cabinet Beau de Loménie
(86) Numéro de dépôt international: PCT/FR2016/053572
(87) Numéro de publication internationale: WO 2017/109381

(56) Documents cités:
- EP-A1- 2 884 712
- US-A1- 2015 349 826
- US-A1- 2015 350 878

## Description

### Arrière-plan de l'invention

La présente invention porte sur le domaine des modules d'identité de souscripteur embarqués appelés aussi modules eUICC (pour « *embedded Universal Integrated Circuit Chip* »)*,* et concerne plus particulièrement de tels modules eUICC aptes à gérer de façon appropriée une pluralité de profils de communication.

De façon connue, une carte SIM conventionnelle est configurée pour permettre à un terminal de communication (tel qu'un téléphone portable par exemple) avec lequel elle coopère pour utiliser le réseau de communication d'un seul opérateur de téléphonie. Pour ce faire, la carte SIM comprend des données de souscription comme par exemple un identifiant IMSI (pour « *International Mobile Subscriber Identity* »)*,* des clés cryptographiques et des algorithmes propres à l'opérateur associé. Ces données de souscription sont stockées de façon permanente dans une mémoire morte de la carte SIM.

Lorsqu'un téléphone portable tente d'utiliser les services d'un réseau cellulaire, il envoie toutes les données de souscription, stockées dans la carte SIM, nécessaires à l'opérateur du réseau pour obtenir l'accès aux services requis. L'opérateur peut ainsi authentifier l'utilisateur et vérifier à l'aide d'une base de données HLR (pour « *Home Location Register* ») que celui-ci a bien souscrit au service demandé. Dans l'affirmative, l'opérateur autorise alors l'accès au téléphone portable embarquant la carte SIM dont les données ont été utilisées pour l'authentification et l'enregistrement auprès du réseau de l'opérateur.

Par ailleurs, on connaît aujourd'hui les cartes SIM reprogrammables, et plus particulièrement les modules d'identité de souscripteur embarqués ou module eUICC. Ces modules reprogrammables permettent à un utilisateur de changer d'opérateur sans avoir à remplacer physiquement la carte SIM dans le téléphone portable. Les principales spécifications d'un module eUICC sont définies par le groupe GSMA (pour « *Global System for Mobile Communications Association* ») dans le standard GSMA SGP.02 v3.0 intitulé « Remote Provisioning Architecture for Embedded UICC - Technical Spécification - Version 3.0 » datant du 30 juin 2015. Un module eUICC est un élément matériel sécurisé de petite taille pouvant être intégré dans un terminal mobile afin de mettre en œuvre les fonctions d'une carte SIM traditionnelle.

En particulier, un module eUICC est apte à contenir plusieurs profils de communication (appelés aussi par la suite « profils »). Chaque profil est contenu dans un domaine sécurisé dédié nommé ISD-P conformément audit standard GSMA. Lorsqu'un profil de communication est actif, il permet au téléphone portable d'accéder de façon sécurisée au réseau de communication d'un opérateur associé, ainsi qu'aux services définis par le profil en question. En changeant le profil de communication actif dans le module eUICC, il est possible de changer d'opérateur ou de modifier l'accès à des services associés (services voix et/ou de données par exemple).

Cependant, lorsqu'un module eUICC comprend plusieurs profils de communication, il est nécessaire de désactiver un profil lorsque l'on souhaite en activer un autre. Pour ce faire, le serveur SM-SR en charge du cycle de vie des profils chargés au sein d'un module eUICC envoie des requêtes via le réseau cellulaire pour, par exemple, activer ou désactiver le profil en question dans le module eUICC.

Lorsqu'un profil de communication est activé dans le module eUICC, l'opérateur, propriétaire et responsable dudit profil de communication actif, est généralement amené, par l'intermédiaire d'un serveur distant, à effectuer des opérations de gestion et/ou maintenance du contenu de ce profil actif. Ces opérations peuvent être, par exemple, des mises à jour de données dans le système de fichiers du profil ou bien encore, par exemple, installer ou désinstaller de nouvelles applications dans ce profil actif.

EP2884712 A1, US2015349826 A1 et US2015350878 A1 fournissent des enseignements liés au contexte de la présente demande et des revendications qui définissent l'invention. Il existe aujourd'hui un besoin pour améliorer la gestion du contenu de profil de communication dans un module eUICC coopérant avec un terminal de communication.

### Objet et résumé de l'invention

L'invention est définie par les revendications.

A cet effet, la présente invention concerne un module d'identité de souscripteur embarqué (ou module eUICC) apte à coopérer avec un terminal de communication, comprenant :
- une pluralité de profils de communication, au moins deux desdits profils de communication étant actifs en même temps de sorte à autoriser le terminal de communication à communiquer avec chaque réseau de téléphonie mobile associé audit au moins deux profils de communication actifs;
- un module de réception pour recevoir, depuis le terminal de communication, une commande destinée à l'un des profils de communication actifs, dit profil destinataire ; et
- un module de détermination pour déterminer le profil destinataire parmi les profils de communication actifs à partir d'un identifiant du profil destinataire inclus dans ladite commande.

La présente invention permet de déterminer, pour chaque commande reçue par un module eUICC, le profil de communication actif destinataire de ladite commande. Grâce à l'invention, un module eUICC peut ainsi maintenir à l'état actif une pluralité de profils, chacun des profils étant apte à recevoir et traiter les commandes qui lui sont destinées. De cette façon, on peut activer plusieurs profils en même temps et s'affranchir de l'envoi de requêtes d'activation et de désactivation depuis les opérateurs de réseau mobile, limitant ainsi le trafic et les ressources réseau.

Selon un mode de réalisation particulier, le module d'identité de souscripteur embarqué comprend un module de traitement pour diriger (ou envoyer) la commande vers ledit profil destinataire. Il est ainsi possible d'aiguiller chaque commande vers le profil actif approprié.

Selon un mode de réalisation particulier, le terminal de communication comprend au moins une interface radio, au moins l'un des profils de communication actifs ayant accès à ladite au moins une interface radio afin de permettre l'établissement d'une communication entre le terminal de communication et le réseau de téléphonie mobile associé audit profil de communication actif.

Selon un mode de réalisation particulier, ladite commande est une commande APDU conforme à la norme ISO 7816-4, et dans lequel l'identifiant du profil destinataire est inclus dans l'octet de classe CLA défini par la norme ISO 7816-4.

Selon un mode de réalisation particulier, l'identifiant du profil destinataire est codé sur la base du bit 5 de l'octet de classe CLA.

Selon un mode de réalisation particulier, le bit 5 de l'octet de classe CLA peut basculer entre un premier état et un deuxième état, le module de détermination étant configuré pour déterminer qu'un premier profil de communication actif dans le module d'identité de souscripteur embarqué est destinataire de ladite commande lorsque le bit 5 est dans le premier état, et pour déterminer qu'un deuxième profil de communication actif dans le module d'identité de souscripteur embarqué est destinataire de ladite commande lorsque le bit 5 est dans le deuxième état, lesdits premier et deuxième profils de communications actifs étant distincts l'un de l'autre

Selon un mode de réalisation particulier, l'identifiant du profil destinataire est codé sur la base des bits 1 et 2 de l'octet de classe CLA.

Selon un mode de réalisation particulier, les bits 1 et 2 de l'octet de classe CLA peuvent chacun basculer entre un premier état et un deuxième état, le module de détermination étant configuré pour déterminer le profil destinataire à partir de l'état dans lequel se trouvent lesdits bits 1 et 2 dans la commande APDU.

L'invention concerne également un dispositif apte à envoyer une commande à un module d'identité de souscripteur embarqué coopérant avec un terminal de communication, le dispositif comprenant :
- un module d'envoi pour envoyer la commande à destination de l'un parmi une pluralité de profils de communication actifs en même temps dans le module d'identité de souscripteur embarqué, chaque profil de communication actif autorisant le terminal de communication à communiquer avec un réseau de téléphonie mobile respectif ; et
- un module de traitement configuré pour inclure, avant envoi de la commande, un identifiant d'un profil de communication actif destinataire de ladite commande.

Le dispositif peut par exemple être le terminal lui-même ou un serveur distant de gestion de contenu, ledit terminal et le serveur étant conformes aux normes GSMA SGP.02 v3.0 (appelée « norme GSMA » dans le présent exposé). Comme référencée dans la norme GSMA, les normes suivantes peuvent être utilisées pour gérer le contenu de profils actifs dans le cadre de l'invention : ETSI TS 102 225 « *Secured packet structure for UICC based applications* » release 12 et/ou ETSI TS 102 226 « *Remote APDU structure for UICC based applications* » release 9 et/ou GlobalPlatform Card Specification v.2.2 Amendment B: Remote Application Management over http v1.1.3.

Les divers modes de réalisation définis ci-avant en référence avec le module d'identité de souscripteur embarqué s'appliquent par analogie au dispositif de l'invention.

L'invention concerne aussi un système comprenant :
- un module d'identité de souscripteur embarqué tel que défini ci-avant ;
- un terminal de communication coopérant avec le module d'identité de souscripteur embarqué ; et
- au moins un dispositif tel que défini ci-avant.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

L'invention concerne en outre un signal émis par un dispositif vers un module d'identité de souscripteur embarqué coopérant avec un terminal de communication, ledit module d'identité de souscripteur embarqué comprenant une pluralité de profils de communication actifs, chaque profil de communication actif autorisant le terminal de communication à communiquer avec un réseau de téléphonie mobile respectif,

dans lequel le signal transporte une commande comprenant un identifiant d'un profil de communication destinataire de ladite commande parmi lesdits profils de communication actifs.

Corrélativement, l'invention propose un procédé de traitement mis en œuvre par un module d'identité de souscripteur embarqué (ou module eUICC) coopérant avec un terminal de communication, comprenant des étapes de :
- maintien à l'état activé d'au moins deux profils de communication, dits profils de communication actifs, en même temps de sorte à ce que chaque profil de communication actif autorise le terminal de communication à communiquer avec un réseau de téléphonie mobile respectif associé audit profil de communication ;
- réception, depuis le terminal de communication, d'une commande destinée à l'un des profils de communication actifs, dit profil destinataire ; et
- détermination du profil destinataire parmi les profils de communication actifs à partir d'un identifiant du profil destinataire inclus dans ladite commande.

Les divers modes de réalisation définis ci-avant en référence avec le module d'identité de souscripteur embarqué s'appliquent par analogie au procédé de traitement de l'invention.

L'invention propose également un procédé d'envoi mis en œuvre par un dispositif pour envoyer une commande à un module d'identité de souscripteur embarqué coopérant avec un terminal de communication, le procédé comprenant des étapes de :
- inclusion, dans une commande, d'un identifiant d'un profil de communication destinataire parmi une pluralité de profils de communication actifs en même temps dans le module d'identité de souscripteur embarqué, chaque profil de communication actif autorisant le module d'identité de souscripteur embarqué à communiquer, via le terminal de communication, avec un réseau de téléphonie mobile respectif ; et
- envoi de ladite commande, au terminal de communication, à destination du profil de communication destinataire parmi la pluralité de profils actifs dans le module d'identité de souscripteur embarqué.

Le dispositif peut par exemple être le terminal lui-même ou un serveur distant de gestion de contenu conforme aux normes GSMA SGP.02 v3.0 et/ou ETSI TS 102 225 « *Secured packet structure for UICC based applications* » release 12 et/ou ETSI TS 102 226 « *Remote APDU structure for UICC based applications* » release 9 et/ou GlobalPlatform Card Specification v.2.2 Amendment B: Remote Application Management over http v1.1.3.

Dans un mode particulier de réalisation, les différentes étapes du procédé de traitement et du procédé d'envoi sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un module d'identité de souscripteur embarqué, dans un dispositif, ou plus généralement dans un ordinateur, ce programme comportant des instructions adaptées à la mise en œuvre des étapes d'un procédé de traitement ou d'un procédé d'envoi tels que définis ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente, de manière schématique, un module d'identité de souscripteur embarqué coopérant de façon connue avec un terminal ;
- la figure 2 représente, de manière schématique, un terminal, un module d'identité de souscripteur embarqué et des serveurs conformes à un mode de réalisation particulier de l'invention ;
- les figures 3A et 3B représentent schématiquement deux modes de réalisation du terminal ;
- les figures 4 et 5 représentent, de manière schématique, des modules mis en œuvre respectivement dans le module d'identité de souscripteur embarqué de la figure 2 et dans un serveur représenté en figure 2, conformément à un mode de réalisation particulier de l'invention ;
- la figure 6 représente, sous forme d'un diagramme, les principales étapes d'un procédé de traitement et les principales étapes d'un procédé d'envoi, conformément à un mode de réalisation particulier de l'invention ;
- la figure 7 représente schématiquement l'utilisation de certains bits de l'octet de classe CLA d'une commande APDU, selon des modes de réalisation particulier de l'invention ; et
- la figure 8 représente, sous forme d'un diagramme, les principales étapes d'un procédé de traitement et les principales étapes d'un procédé d'envoi, conformément à une variante du mode de réalisation illustré en figure 6.

### Description détaillée de modes de réalisation

Comme déjà indiqué, l'invention proposée se rapporte aux modules d'identité de souscripteur embarqués (appelés aussi « modules eUICC ») et concerne plus particulièrement l'utilisation de tels modules pour gérer simultanément plusieurs profils de communication en coopération avec un terminal de communication.

Aujourd'hui, le standard GSMA SGP.02 v3.0 (appelé par la suite « standard GSMA ») impose une contrainte dans le sens où seulement un profil à la fois peut être à l'état actif dans un module eUICC. Autrement dit, le standard GSMA interdit le cas où plusieurs profils de communication seraient actifs en même temps dans un module eUICC.

Cependant, afin notamment de résoudre les problèmes évoqués ci-avant et d'améliorer la gestion de profils de communication dans un module eUICC, la présente invention propose de permettre à une pluralité de profils d'être actifs en même temps dans un module eUICC.

On comprend ici par profil « actif », ou profil à l'état « actif », le fait qu'un profil de communication est activé dans le module eUICC afin d'autoriser le terminal de communication (avec lequel le module eUICC coopère) à communiquer avec le réseau de téléphonie associé au profil en question. Conformément au standard GSMA, un profil (ou le domaine sécurisé ISD-P dans lequel il est contenu) est dit « actif » (ENABLE) lorsque son paramètre d'état, dénommé « life cycle », est positionné à l'état '3F'. Toujours selon le standard GSMA, un profil est au contraire dit « inactif » (DISABLE) lorsque son paramètre d'état « life cycle » est positionné à l'état '1F'.

Comme expliqué plus en détail par la suite, un profil de communication peut être actif sans pour autant avoir accès à l'interface radio du terminal de communication. L'accès à cette interface radio peut dans certains cas être limité notamment lorsqu'il n'y a pas autant d'interfaces radio dans le terminal de communication que de profils actifs en même temps dans le module eUICC. Un profil actif ne permet l'établissement d'une communication entre le terminal de communication et le réseau de téléphonie mobile associé au profil que lorsque ce dernier a accès à la ressource radio du terminal de communication.

Dans les modules eUICC conventionnels, le fait que seul un profil puisse être actif à un instant donné a pour conséquence qu'il n'est pas possible d'utiliser plusieurs souscriptions de téléphonie mobile simultanément, comme cela est possible par exemple dans un téléphone DUAL SIM utilisant deux cartes SIM distinctes en même temps.

Pour utiliser simultanément plusieurs souscriptions dans un même terminal de communication, une solution pourrait consister à intégrer plusieurs modules eUICC dans un même terminal de communication. Une telle approche présente toutefois des contraintes importantes en termes de coût et de fabrication notamment.

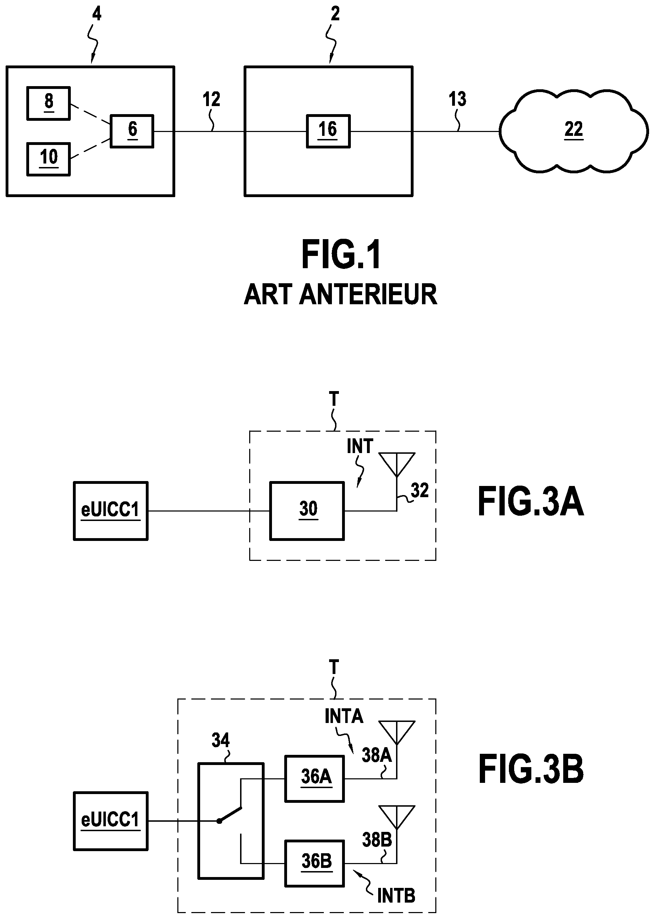

La **figure 1** représente un module eUICC 4 conventionnel apte à coopérer avec un terminal de communication 2 pour permettre à un utilisateur de communiquer avec un réseau 22 de téléphonie mobile. Dans cet exemple, le système d'exploitation 6 (ou OS) du module eUICC 4 est apte à utiliser les profils de communication 8 et 10. Conformément au standard GSMA indiqué ci-avant, seul l'un parmi les profils 8 et 10 peut être actif à un instant donné. Le module eUICC 4 est apte à communiquer avec le terminal 2 via une liaison physique de type ISO 7816. L'interface radio 16 du terminal 2 est capable d'émettre et de recevoir des communications radio avec l'extérieur via par exemple une antenne (non représentée). L'unique profil (8 ou 10) qui est actif dans le module eUICC 4 a accès (par l'intermédiaire du système d'exploitation du terminal 2) à l'interface radio 16 via la liaison 12 de sorte à permettre l'établissement d'une communication 13, pouvant être de type donnée (data) et/ou voix (voice), entre le terminal 2 et le réseau de téléphonie mobile 22 associé au profil en question.

Comme indiqué ci-avant, la présente invention prévoit la possibilité d'avoir une pluralité de profils actifs en même temps dans un module eUICC. Cette approche présente cependant une difficulté dans le sens où il n'existe pas aujourd'hui de solution permettant à un module eUICC, dans lequel plusieurs profils seraient susceptibles d'être actifs en même temps, de gérer de façon appropriée des commandes reçues depuis l'extérieur du terminal de communication à destination de l'un ou l'autre des profils actifs.

Afin notamment de résoudre les problèmes évoqués ci-dessus, et afin d'améliorer la gestion des profils de communication dans un module eUICC, la présente invention propose de permettre à un module eUICC de déterminer le profil actif destinataire de chaque commande reçue via le terminal de communication. Pour ce faire, l'invention prévoit l'inclusion, dans chaque commande envoyée au module eUICC à destination d'un profil de communication, d'un identifiant du profil actif destinataire de ladite commande. Le module eUICC est ainsi apte, à partir de cet identifiant, à déterminer le profil destinataire et peut avantageusement diriger la commande vers le profil destinataire ainsi déterminé.

Comme expliqué par la suite, divers modes de réalisation et variantes peuvent être envisagés dans le cadre de l'invention. En particulier, divers types d'identifiant à inclure dans les commandes peuvent être envisagés pour identifier le profil actif destinataire dans le module eUICC.

Sauf indications contraires, les éléments communs ou analogues à plusieurs figures portant les mêmes signes de référence et présentant des caractéristiques identiques ou analogues, de sorte que ces éléments communs ne sont généralement pas à nouveau décrits par souci de simplicité.

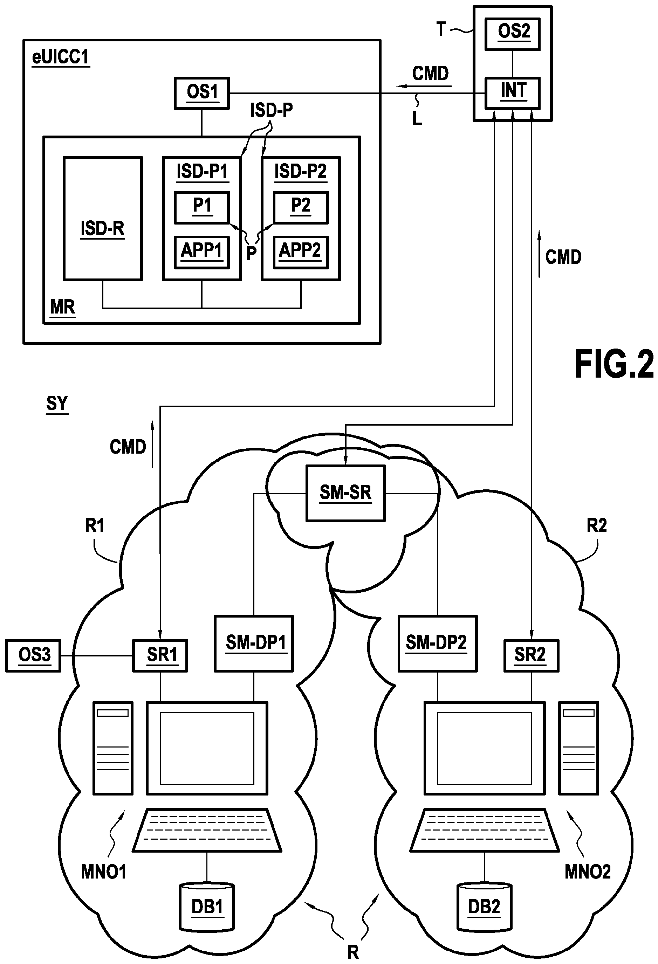

La **figure 2** représente, de manière schématique, la structure d'un module eUICC (noté eUICC1) apte à coopérer avec un terminal de communication T pour permettre l'accès à un réseau de téléphonie mobile R. Le module eUICC1 est par exemple soudé ou intégré au terminal T.

Dans le mode de réalisation décrit ici, le terminal T est un terminal mobile tel qu'un téléphone portable par exemple, d'autres mises en œuvre étant toutefois envisageables dans le cadre de l'invention.

Dans le mode de réalisation décrit ici, le terminal mobile T peut utiliser le module eUICC1 pour accéder de façon sécurisée au réseau R1 et au réseau R2 (appelés collectivement R), ainsi qu'aux services fournis par l'opérateur de téléphonie associé MNO1, MNO2 (appelés plus généralement MNO pour « *Mobile Network Operator* »).

Dans ce mode de réalisation particulier, le terminal mobile T comporte un système d'exploitation OS2 apte à contrôler notamment une interface radio INT. Comme représenté en **figure 3A****,** cette interface radio INT comprend par exemple, de façon connue, une unité émettrice/réceptrice radio 30 couplée à une antenne 32. Comme expliqué ultérieurement en référence à la **figure 3B****,** on peut également envisager la présence dans le terminal T d'une pluralité d'interfaces radio.

Dans le mode de réalisation décrit ici, le module eUICC1 comprend un système d'exploitation OS1 (stocké dans une mémoire non-volatile, une mémoire morte ou Flash par exemple) couplé à une mémoire non volatile réinscriptible MR.

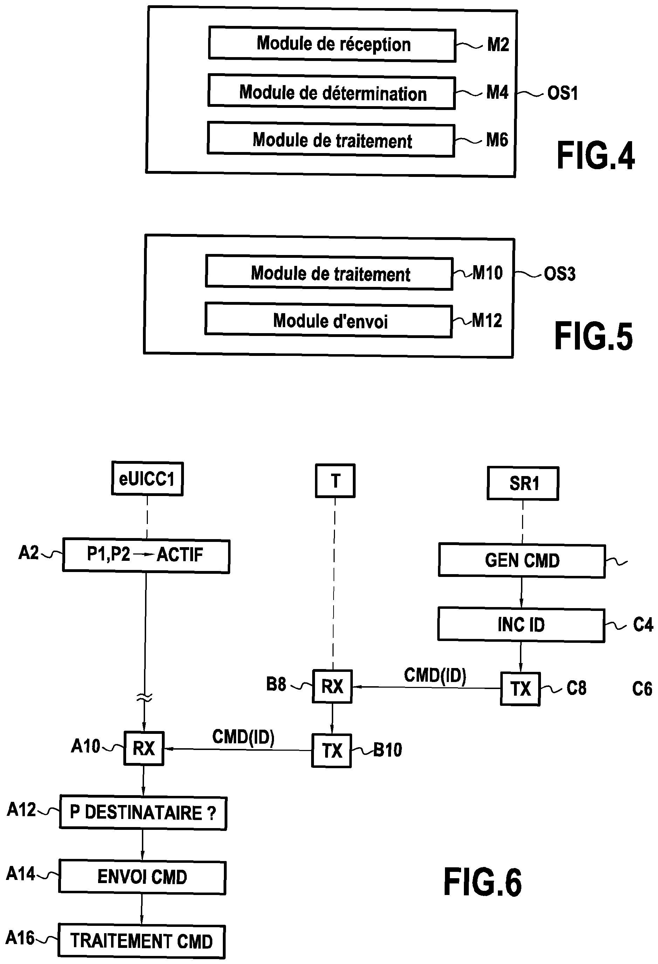

Le système d'exploitation OS1 comprend un certain nombre de modules qui seront décrits plus en détail ultérieurement en référence à la **figure 4****.**

Le système d'exploitation OS1 constitue un exemple de programme d'ordinateur au sens de l'invention, ce programme comportant des instructions pour l'exécution des étapes d'un procédé de traitement selon un mode de réalisation particulier de l'invention. La mémoire dans laquelle se trouve le système d'exploitation OS1 constitue ainsi un exemple de support d'enregistrement au sens de l'invention, lisible par un processeur (non représenté) du module eUICC1.

Comme représenté en **figure 2****,** la mémoire non volatile MR du module eUICC1 comporte par ailleurs un domaine de sécurité privilégié ISD-R, ainsi que des domaines de sécurité secondaires ISD-P notés dans cet exemple ISD-P1 et ISD-P2. Chaque domaine de sécurité (ou domaine sécurisé) constitue un compartiment sécurisé du module eUICC1. On comprendra que le mode de réalisation particulier envisagé ici ne constitue qu'un exemple non limitatif de mise en œuvre de l'invention, le nombre de domaines ISD-P pouvant en particulier être adapté selon le cas d'usage.

Le domaine de sécurité ISD-R est privilégié en ce qu'il est notamment apte à créer, supprimer, activer ou désactiver des domaines de sécurité secondaires ISD-P dans la mémoire non volatile MR.

Chaque domaine de sécurité secondaire ISD-P est apte à contenir un unique profil de communication P (ou profil opérationnel) associé à un opérateur MNO de téléphonie particulier. Chaque profil P est ainsi contenu dans un domaine de sécurité ISD-P qui lui est dédié. De façon connue, un profil de communication P comporte des données de souscription (e.g. identifiants (IMSI etc.), clés cryptographiques, algorithmes (e.g. d'authentification)...) et peut comporter en outre un système de fichiers, des applications, ou encore des règles d'exécution prédéterminées. Dans l'exemple envisagé ici, les profils P sont conformes au standard GSMA.

Plus particulièrement, dans l'exemple décrit ici, le domaine de sécurité secondaire ISD-P1 comporte un profil de communication P1 autorisant, lorsqu'il est actif, le terminal T à communiquer avec un premier réseau mobile R1 associé à l'opérateur de téléphonie MNO1. Le domaine de sécurité ISD-P1 peut en outre comprendre des applications APP1 propres à l'opérateur MNO1 auxquelles l'utilisateur a souscrit. Alternativement, les applications APP1 définies pour le profil P1 peuvent être contenues dans le profil P1 lui-même.

De même, le domaine de sécurité secondaire ISD-P2 comporte un profil de communication P2 autorisant, lorsqu'il est actif, le terminal T à communiquer avec un deuxième réseau mobile R2 associé à un deuxième opérateur de téléphonie MNO2. Le domaine de sécurité ISD-P2 peut comprendre en outre des applications APP2 propres à l'opérateur MNO2 auxquelles l'utilisateur a souscrit. Alternativement, les applications APP2 définies pour le profil P2 peuvent être contenues dans le profil P2 lui-même.

Dans le mode de réalisation décrit ici, le module eUICC1 est apte à maintenir une pluralité de profils de communication P (à savoir P1 et P2 dans cet exemple) à l'état actif en même temps.

Le module eUICC1 est par ailleurs apte à communiquer, par l'intermédiaire du terminal T (et en particulier de son interface radio INT), de façon sécurisée avec une serveur distant SM-SR (pour « *Subscription Manager-Secure Routing* ») appartenant à la fois au réseau R1 et au réseau R2.

La communication entre le module eUICC1 et le terminal T est réalisée dans cet exemple via une liaison L conforme à la norme ISO 7816 (comme définie plus particulièrement selon ISO 7816-3 et ISO 7816-4).

Dans ce mode de réalisation particulier, le réseau R1 comprend un serveur distant de gestion de contenu SR1 permettant à l'opérateur MNO1 de gérer le contenu du profil P1 dans le module eUICC1. De même, le réseau R2 comprend un serveur distant de gestion de contenu SR2 permettant à l'opérateur MNO2 de gérer le contenu du profil P2 dans le module eUICC1. Une fois les profils P1 et P2 activés au sein du module eUICC1, les opérateurs MNO1 et MNO2 peuvent ainsi utiliser leur serveur respectif SR1, SR2 afin de réaliser des opérations de gestion d'applications ou de fichiers au sein du profil actif associé.

Ces serveurs distants SR1, SR2 sont par exemple des serveurs RAM pour « Remote Application Management » ou de type RFM pour « Remote File Management ».

La gestion du contenu de profil (applications et/ou fichiers) permet, au sein d'un profil, par exemple et de façon non limitative, d'installer de nouvelles applications, de mettre à jour des fichiers, de désinstaller des applications, de créer des fichiers, d'effacer des fichiers, ...

Dans ce mode de réalisation, pour réaliser la gestion du profil P1 (respectivement P2), le serveur distant de gestion de contenu SR1 (respectivement SR2) est apte à envoyer, via le réseau R1 (respectivement R2) et le terminal T, des commandes spécifiques au profil P1 (respectivement P2) dans le module eUICC1. Ces commandes spécifiques, dites commandes de gestion de contenu, permettent de gérer les fichiers et/ou les applications du profil P1 (respectivement P2) visé dans le module eUICC1. Ces commandes spécifiques peuvent par exemple, et de façon non exhaustive, comprendre les commandes APDU « update record », « delete file », « update binary », « install install », « select file », ... connue de l'homme du métier. Chaque serveur distant SR1, SR2 peut ainsi utiliser l'interface radio INT du terminal T pour atteindre un profil actif cible dans le module eUICC1.

Dans l'exemple de réalisation décrit ici, le serveur SR1 met en œuvre un système d'exploitation OS3. Le système d'exploitation OS3 constitue un exemple de programme d'ordinateur au sens de l'invention, ce programme comportant des instructions pour l'exécution des étapes d'un procédé d'envoi selon un mode de réalisation particulier de l'invention. La mémoire (non représentée) dans laquelle se trouve le système d'exploitation OS3 constitue un exemple de support d'enregistrement au sens de l'invention, lisible par un processeur (non représenté) du serveur distant de gestion de contenu.

On comprendra que le serveur distant de gestion de contenu SR2 présente une structure et un fonctionnement analogues à ceux du serveur SR1 de sorte que le serveur SR2 ne seront pas décrit en détail dans le présent exposé.

Dans l'exemple considéré ici, le serveur de gestion de contenu SR1 est apte à envoyer des commandes CMD de gestion de contenu, au terminal T, à destination de l'un parmi les profils de communication P se trouvant à l'état actif et sous sa responsabilité dans le module eUICC1. Pour pouvoir recevoir et traiter une commande CMD, un profil de communication P doit être actif. Dans cet exemple, le domaine de sécurité ISD-R est apte à activer un profil P en réponse à une commande d'activation envoyée par le serveur SM-SR.

Les commandes CMD susceptibles d'être reçues par un profil P lorsque celui-ci est actif peut, par exemple, être de type APDU.

Comme représenté en **figure 2****,** dans cet exemple, les opérateurs MNO1 et MNO2 sont chacun aptes à communiquer avec un serveur SM-DP respectif (ou plus généralement un dispositif), nommé ici respectivement SM-DP1 et SM-DP2. En outre, les opérateurs MNO1 et MNO2 ont ici chacun accès à une base de données respective (DB1 et DB2) contenant chacune des informations de souscription notamment. L'usage notamment des serveurs SM-DP1, SP-DP2 et des bases de données DB1, DB2 n'est pas nécessaires pour mettre en œuvre l'invention.

Les serveurs SM-DP1 et SM-DP2 sont chacun aptes à transmettre au serveur SM-SR des commandes de création de profils (création d'un domaine ISD-P...) et des données initiales à charger dans un profil.

D'autre part, conformément à l'invention, le module eUICC1 est apte à recevoir les commandes CMD provenant des serveurs distants de gestion de contenu SR1, SR2 et à diriger celles-ci vers le profil de communication P actif destinataire de ladite commande CMD parmi une pluralité de profils actifs dans le module eUICC1.

Le module eUICC1, le terminal T et les serveurs de gestion de contenu SR1 et SR2 forment ensemble un système SY.

On comprendra que certains éléments généralement présents dans un module eUICC, dans un terminal de communication T ou encore dans un serveur SM-SR ou dans un serveur gestion de contenu ont été volontairement omis car ils ne sont pas nécessaires à la compréhension de la présente invention. En outre, l'homme du métier comprendra que certains éléments sont décrits ici pour faciliter la compréhension de l'invention bien qu'ils ne soient pas obligatoires ou directement impliqués pour dans la mise en œuvre l'invention.

Comme indiqué ci-avant en référence à la **figure 3A****,** le terminal T peut comprendre une unique interface radio INT. Dans ce cas, seul un des profils P actifs dans le module eUICC1 peut permettre, à un instant donné, l'établissement d'une communication entre le terminal T et le réseau mobile R. Dans ce cas, lorsque les profils P1 et P2 sont actifs en même temps, seul l'un des deux profils P est apte à établir une communication avec le réseau de l'opérateur MNO associé.

On peut toutefois envisager l'inclusion dans le terminal T d'une pluralité d'interfaces radio INT. La **figure 3B** représente par exemple un mode de réalisation selon lequel le terminal T comprend un commutateur 34 apte à aguiller les communications entre le module eUICC1 et deux interface radio INTA et INTB du terminal T. L'interface radio INTA (respectivement INTB) comprend ici une unité émettrice/réceptrice radio 36A (respectivement 36B) couplée à une antenne 38A (respectivement 38B). Selon ce mode de réalisation, le commutateur 34 peut diriger chaque commande CMD reçue par l'une des interfaces radio INTA, INTB vers le module eUICC1. Lorsqu'un canal entre le module eUICC1 et une interface radio est utilisé, l'autre canal entre le module eUICC1 et l'autre interface radio n'est pas disponible.

Comme déjà indiqué, un profil de communication P qui est actif dans le module eUICC1 n'est apte à établir une communication entre le terminal T et un réseau mobile R associé que lorsque ce profil P a accès aux ressources radio du terminal T (c'est-à-dire à l'interface radio).

Selon un mode de réalisation particulier, le terminal T est apte à multiplexer dans le temps les données envoyées ou reçues par différents profils P dans le module eUICC1.

Comme représenté en **figure 4****,** le système d'exploitation OS1 du module eUICC1 met en œuvre dans cet exemple un certain nombre de modules, à savoir : un module de réception M2, un module de détermination M4 et un module de traitement M6.

Plus particulièrement, le module de réception M2 est apte à recevoir, depuis le terminal de communication T, une commande notée CMD destinée à l'un des profils de communication P, dit profil destinataire, qui est actif dans le module eUICC1.

Le module de détermination M4 est configuré pour déterminer le profil destinataire parmi les profils de communication actifs P à partir d'un identifiant du profil destinataire inclus dans chaque commande CMD reçue.

De plus, dans cet exemple, le module de traitement M6 est configuré pour diriger chaque commande CMD reçue vers le profil destinataire déterminé par le module de détermination M4.

On comprendra que la définition ci-dessus des modules M2, M4 et M6 ne constitue qu'un mode de réalisation non limitatif de l'invention. Au moins deux parmi ces modules peuvent notamment former un seul et même module mis en œuvre dans le module eUICC1.

Comme représenté en **figure 5****,** le système d'exploitation OS3 du serveur de gestion de contenu SR1 met, dans cet exemple, en œuvre un module de traitement M10 et un module d'envoi M12.

Plus particulièrement, le module de traitement M10 est configuré pour inclure, dans une commande CMD à envoyer au module eUICC1, un identifiant d'un profil de communication P destinataire de la commande CMD.

Le module d'envoi M12 est par ailleurs configuré pour envoyer au module eUICC1 la commande CMD comprenant ledit identifiant, ladite commande CMD étant à destination dudit profil destinataire.

Le serveur de gestion de contenu SR2 étant identique au serveur de gestion de contenu SR1, il ne sera pas décrit plus en détail dans cet exposé.

On comprendra que la définition ci-dessus des modules M10 et M12 ne constitue qu'un mode de réalisation non limitatif de l'invention. Au moins deux parmi ces modules peuvent notamment former un seul et même module mis en œuvre dans le serveur de gestion de contenu.

Un mode de réalisation particulier de l'invention, mis en œuvre notamment par le module eUICC1 et par le serveur distant de gestion de contenu SR1, est à présent décrit en référence au diagramme de la **figure 6****.** Pour ce faire, le module eUICC1 exécute le système d'exploitation OS1 pour mettre en œuvre un procédé de traitement selon un mode de réalisation particulier, et le serveur de gestion de contenu SR1 exécute le système d'exploitation OS3 pour mettre en œuvre un procédé d'envoi selon un mode de réalisation particulier.

On suppose ici que les profils de communication P1 et P2 ont été préalablement activés dans le module eUICC1. Dans cet exemple, chaque activation de profil est par exemple réalisée par le domaine de sécurité privilégié ISD-R en réponse à une requêtes d'activation envoyée par le serveur SM-SR associé au profil P en question. On suppose que le module eUICC1 maintient (A2) à l'état actif les profils P1 et P2 dans la suite de cet exemple de procédé de traitement.

Au cours d'une étape de génération C4, le serveur de gestion de contenu SR1 génère une commande CMD destinée au profil de communication P1 actif dans le module eUICC1. Cette commande CMD est par exemple de type APDU conforme à la norme ISO 7816-4.

Dans un exemple particulier, la commande CMD est une commande APDU de type enveloppe, pouvant contenir au moins une commande (mise à jour d'un fichier...) à destination d'un profil actif dans le module eUICC1.

Au cours d'une étape d'inclusion C6, le serveur de gestion de contenu SR1 inclut, dans la commande CMD, un identifiant ID du profil P destinataire de ladite commande CMD (à savoir le profil P1 dans cet exemple). Comme indiqué par la suite, cet identifiant ID peut prendre diverses formes selon le cas d'usage.

Au cours d'une étape d'envoi C8, le serveur de gestion de contenu SR1 envoie, au terminal T, la commande CMD comportant l'identifiant ID. Une fois reçu (B8), le terminal T transfère (B10) au module eUICC1 la commande CMD, à destination du profil P identifié par l'identifiant ID.

Le module eUICC1 reçoit la commande CMD au cours d'une étape de réception A10.

Le module eUICC1 détermine (A12) ensuite, à partir de l'identifiant ID inclus dans la commande CMD, le profil P actif destinataire de la commande CMD.

Au cours d'une étape d'envoi A14, le module eUICC1 envoie la commande CMD au profil P destinataire déterminé à l'étape A12. Le module eUICC1 est ainsi apte à aiguiller une commande reçue vers le profil P actif approprié.

En réponse à la commande CMD reçue, le profil P destinataire réalise le traitement approprié A16 relatif à la commande reçue.

Dans cet exemple de réalisation, les étapes d'inclusion C6 et d'envoi C8 sont réalisées respectivement par les modules M10 et M12 du serveur de gestion de contenu SR1. De même, les étapes de réception A10, de détermination A12 et d'envoi A14 sont réalisées respectivement par les modules M2, M4 et M6.

Le serveur de gestion de contenu SR2 peut être configuré pour mettre en œuvre le procédé d'envoi de l'invention de la même manière que le serveur distant SR1.

Selon un mode de réalisation particulier, la commande CMD envoyée en C8 par le serveur de gestion de contenu SR1 et traitée par le module eUICC1 est une commande APDU conforme à la norme ISO 7816-4.

Comme indiqué ci-avant, l'identifiant ID du profil actif destinataire de la commande CMD peut prendre différentes formes, selon le cas d'usage.

Selon un mode de réalisation particulier, l'identifiant ID du profil destinataire est inclus dans l'octet de classe CLA de la commande CMD, tel que défini par la norme ISO 7816-4.

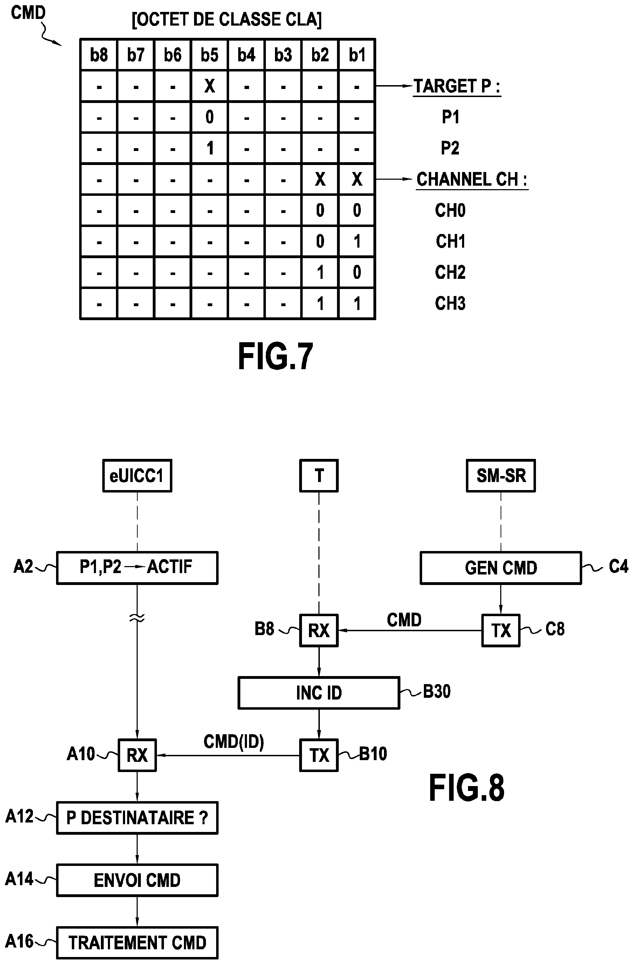

La **figure 7** représente schématiquement l'état des bits de l'octet de classe CLA de la commande CMD selon différents modes de réalisation.

Selon un mode de réalisation particulier, l'identifiant ID du profil destinataire est codé sur la base du bit 5 (noté b5) de l'octet de classe CLA de la commande CMD. Autrement dit, le serveur de gestion de contenu SR1 est configuré pour formater la commande CMD à envoyer au terminal T en codant l'identifiant ID à l'aide du bit 5 de l'octet de classe CLA de la commande CMD. Conformément au standard ETSI 102221, le bit 5 de l'octet de classe CLA n'a pas d'usage prédéfini. L'invention propose donc, dans ce mode de réalisation particulier, d'utiliser de façon avantageuse ce bit 5 de l'octet CLA afin d'identifier le profil P actif qui est destinataire de la commande considérée.

Selon un mode de réalisation particulier, le bit 5 de l'octet de classe CLA d'une commande CMD peut basculer entre un premier état '0' et un deuxième état '1', le module de détermination M4 étant configuré pour déterminer que le premier profil de communication actif P1 dans le module eUICC1 est destinataire d'une commande CMD lorsque le bit b5 est à l'état '0', et pour déterminer que le deuxième profil de communication actif P2 est destinataire de la commande CMD lorsque le bit b5 est à l'état '1', lesdits profils actifs P1 et P2 étant distincts l'un de l'autre.

L'usage du bit 5 permet avantageusement de différentier le trafic entrant dans le module eUICC1, à destination soit d'un premier profil P1, soit d'un deuxième profil P2. On notera toutefois que seul un bit est ici utilisé (ce bit ne pouvant prendre que les états '0' et '1') de sorte qu'il n'est pas possible de différentier plus de deux profils actifs différents.

Ce mode de réalisation présente notamment l'avantage en ce qu'il est possible d'utiliser deux profils actifs P simultanément en donnant à chaque profil P accès à une interface radio INTA, INTB comme représenté en **figure 3B****.** Si, en revanche, une seule interface radio INT est disponible dans le terminal T (comme représenté en **figure 3A**), seul le profil actif P ayant accès à l'interface radio INT à un instant donné est apte à établir une communication entre le terminal T et le réseau mobile (R1 ou R2) associé audit profil.

On notera toutefois que, selon le standard ISO 7816, le bit 5 peut être utilisé pour la fonction « *command chaining control* », lorsque cette fonction est supportée par le module eUICC. Aussi, lorsque le bit 5 de l'octet CLA est utilisé pour identifier le profil P destinataire, la fonction « *command chaining control* » ne peut pas être utilisés.

Par ailleurs, dans le mode de réalisation décrit ci-avant, ce sont les serveurs de gestion de contenu SR1, SR2 qui mettent en œuvre le procédé d'envoi de l'invention. On comprendra cependant que le procédé d'envoi de l'invention peut être réalisé par une autre entité selon le cas d'espèce.

Selon un mode de réalisation particulier, l'inclusion de l'identifiant ID du profil actif destinataire est réalisée par le terminal T après réception de la commande. Autrement dit, c'est le terminal T qui met en œuvre le procédé d'envoi selon l'invention, dans lequel le terminal T inclus dans une commande CMD un identifiant ID d'un profil actif destinataire de la commande au sein du module eUICC1. Cet identifiant ID est par exemple codé à l'aide du bit 5 de l'octet de classe CLA de la commande CMD. Une fois l'inclusion réalisée, le terminal T envoie la commande comportant l'identifiant ID au module eUICC1 de sorte que ce dernier aiguille la commande vers le profil destinataire à partir de l'identifiant ID.

Comme représenté par exemple en **figure 2****,** lorsqu'un profil P actif du module eUICC1 communique avec le terminal T, il le fait via l'interface ISO 7816 représentée par la liaison L. Selon le standard ISO 7816, 4 canaux logiques différents peuvent normalement être utilisés pour communiquer entre le module eUICC1 et le terminal T, le canal logique utilisé étant identifié dans chaque commande APDU avec les bits 1 et 2 de l'octet de classe CLA. Un profil actif P recevant une commande APDU peut ainsi prendre connaissance du canal logique utilisé par la transmission via la liaison L.

Comme représenté en **figure 7****,** on note ici CH0, CH1, CH2 et CH3 les 4 canaux logiques normalement disponibles au travers de la liaison L entre le module eUICC1 et le terminal T.

Une variante du mode de réalisation décrit précédemment en référence à la **figure 6** est à présent décrite en référence à la **figure 8****.** Selon cette variante, le procédé d'envoi est réalisé par le terminal T et non par le serveur de gestion de contenu SR1 ou SR2.

Selon ce mode de réalisation particulier, le serveur de gestion de contenu SR1 génère (C4) une commande CMD comme décrit précédemment en référence à la **figure 6****.** Le serveur de gestion de contenu SR1 envoie (C8) ensuite la commande CMD au terminal T.

Le terminal T reçoit la commande CMD au cours d'une étape de réception B8. Le terminal T inclus (B30) ensuite, dans la commande CMD reçue, un identifiant ID du profil actif P destinataire de la commande CMD au sein du module eUICC1.

Dans ce mode de réalisation, l'identifiant ID du profil destinataire de la commande CMD est codé sur la base des bits 1 et 2 de l'octet de classe CLA de ladite commande **(****figure 7****).** Autrement dit, le terminal T est configuré pour formater la commande CMD reçu du serveur de gestion de contenu SR1 en codant l'identifiant ID à l'aide des bits 1 et 2 de l'octet de classe CLA. Ce mode particulier utilise donc avantageusement les deux bits b1 et b2 normalement dédiés à l'identification du canal logique utilisé dans la liaison L, pour identifier cette fois le profil actif P destinataire d'une commande APDU. Dans ce mode de réalisation particulier, le terminal T alloue une ou plusieurs combinaisons des états des bits 1 et 2 (CH0 à CH3) à un même profil P.

Selon un mode de réalisation particulier, les bits 1 et 2 de l'octet de classe CLA d'une commande CMD peuvent chacun basculer entre un premier état '0' et un deuxième état '1', le module de détermination M4 étant configuré pour déterminer le profil P destinataire à partir de l'état dans lequel se trouvent lesdits bits 1 et 2 dans la commande CMD.

Selon un mode de réalisation particulier, le terminal T est configuré pour allouer toujours le ou les mêmes canaux logiques au même profil actif dans le module eUICC. Autrement dit, chaque profil actif dans le module eUICC se voit toujours affecté le ou les mêmes canaux logiques par le terminal T (par exemple le canal CH0 pour un profil P1 et les canaux CH1 et CH2 pour le profil P2). Selon une variante de réalisation, le terminal est configuré pour allouer les canaux logiques de façon dynamique aux profils actifs.

L'utilisation des bits 1 et 2 de l'octet de classe CLA dans le cadre de l'invention est avantageuse en ce qu'il est possible d'identifier si nécessaire plus de deux profils P destinataires distincts. De plus, ce mode de réalisation permet l'usage de la fonction « *command chaining control* » conformément au standard GSMA.

Comme représenté en **figure 8****,** le terminal T envoie (B10) ensuite, au module eUICC1, la commande CMD comprenant l'identifiant ID du profil actif P destinataire. Le module eUICC1 reçoit la commande CMD au cours d'une étape de réception A10 et réalise les étapes A12, A14 et A16 comme déjà décrites ci-avant en référence à la **figure 6****.**

Selon un mode de réalisation particulier, le module eUICC1 est apte à interpréter l'identifiant ID du profil destinataire sur la base du bit 5 de l'octet de classe CLA conformément à la norme ISO 7816-4 et/ou sur la base des bits 1 et 2 de l'octet de classe CLA conformément à la norme ISO 7816-4.

La présente invention permet de diriger chaque commande reçue par un module eUICC vers le profil de communication actif approprié. Grâce à l'invention, un module eUICC peut ainsi maintenir à l'état actif une pluralité de profils. De cette façon, on peut activer plusieurs profils en même temps et s'affranchir de l'envoi de requêtes d'activation et de désactivation depuis les serveurs SM-SR de réseau mobile, limitant ainsi le trafic et les ressources réseau.

La présente invention permet par exemple d'utiliser dans un module eUICC une première souscription (liée à un premier profil) pour réaliser une communication de type « voix », et d'utiliser simultanément une deuxième souscription (liée à un autre profil) pour réaliser une communication de type « données ». D'autres utilisations hybrides de plusieurs profils actifs en même temps sont possibles dans le cadre de l'invention, comme par exemple :
- utiliser des souscriptions différentes en fonction de l'heure de la journée,
- utiliser des souscriptions différentes selon qu'un appel sur le terminal est entrant ou sortant, ou encore
- utiliser des souscriptions différentes selon qu'un appel est national ou international.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Module d'identité de souscripteur embarqué (eUICC1) apte à coopérer avec un terminal de communication (T), comprenant :
- une pluralité de profils de communication (P), au moins deux desdits profils de communication étant actifs en même temps de sorte à autoriser le terminal de communication à communiquer avec chaque réseau de téléphonie mobile associé (R1, R2) audit au moins deux profils de communication actifs;
- un module de réception (M2) pour recevoir, depuis le terminal de communication (T), une commande (CMD) destinée à l'un des profils de communication (P) actifs, dit profil destinataire ; et
- un module de détermination (M4) pour déterminer le profil destinataire parmi les profils de communication actifs à partir d'un identifiant (ID) du profil destinataire inclus dans ladite commande,
le module d'identité de souscripteur embarqué étant **caractérisé en ce que** ladite commande est une commande APDU conforme à la norme ISO 7816-4, et dans lequel l'identifiant (ID) du profil destinataire est inclus dans l'octet de classe CLA défini par la norme ISO 7816-4.

2. Module d'identité de souscripteur embarqué selon la revendication 1, comprenant un module de traitement (M6) pour diriger la commande vers ledit profil destinataire.

3. Module d'identité de souscripteur embarqué selon la revendication 1 ou 2, dans lequel le terminal de communication (T) comprend au moins une interface radio (INT), au moins l'un des profils de communication actifs ayant accès à ladite au moins une interface radio afin de permettre l'établissement d'une communication entre le terminal de communication et le réseau de téléphonie mobile (R1, R2) associé audit profil de communication actif.

4. Module d'identité de souscripteur embarqué selon l'une quelconque des revendications 1 à 3, dans lequel l'identifiant du profil destinataire est codé sur la base du bit 5 de l'octet de classe CLA.

5. Module d'identité de souscripteur embarqué selon la revendication 4, dans lequel le bit 5 de l'octet de classe CLA peut basculer entre un premier état et un deuxième état, le module de détermination étant configuré pour déterminer qu'un premier profil de communication actif dans le module d'identité de souscripteur embarqué est destinataire de ladite commande lorsque le bit 5 est dans le premier état, et pour déterminer qu'un deuxième profil de communication actif dans le module d'identité de souscripteur embarqué est destinataire de ladite commande lorsque le bit 5 est dans le deuxième état, lesdits premier et deuxième profils de communications actifs étant distincts l'un de l'autre.

6. Module d'identité de souscripteur embarqué selon l'une quelconque des revendications 1 à 3, dans lequel l'identifiant du profil destinataire est codé sur la base des bits 1 et 2 de l'octet de classe CLA.

7. Module d'identité de souscripteur embarqué selon la revendication 6, dans lequel les bits 1 et 2 de l'octet de classe CLA peuvent chacun basculer entre un premier état et un deuxième état, le module de détermination (M4) étant configuré pour déterminer le profil destinataire à partir de l'état dans lequel se trouvent lesdits bits 1 et 2 dans la commande APDU.

8. Dispositif (SR1 ; T) apte à envoyer une commande (CMD) à un module d'identité de souscripteur embarqué (eUICC1) coopérant avec un terminal de communication (T), le dispositif comprenant :
- un module d'envoi (M12) pour envoyer la commande à destination de l'un parmi une pluralité de profils de communication (P) actifs en même temps dans le module d'identité de souscripteur embarqué, chaque profil de communication actif autorisant le terminal de communication à communiquer avec un réseau de téléphonie mobile respectif (R1, R2) ; et
- un module de traitement (M10) configuré pour inclure, avant envoi de la commande, un identifiant (ID) d'un profil de communication actif destinataire de ladite commande,
le dispositif étant **caractérisé en ce que** ladite commande est une commande APDU conforme à la norme ISO 7816-4, et dans lequel l'identifiant (ID) du profil destinataire est inclus dans l'octet de classe CLA défini par la norme ISO 7816-4.

9. Dispositif selon la revendication 8, dans lequel ledit dispositif est le terminal (T) ou un serveur distant de gestion de contenu conforme à la norme GSMA SGP.02 v3.0.

10. Système comprenant :
- un module d'identité de souscripteur embarqué (eUICC1) selon l'une quelconque des revendications 1 à 7 ;
- un terminal de communication coopérant avec le module d'identité de souscripteur embarqué ; et
- au moins un dispositif (SR1) selon les revendications 8 ou 9.

11. Signal émis par un dispositif (SR1 ; T) vers un module d'identité de souscripteur embarqué (eUICC1) coopérant avec un terminal, ledit module d'identité de souscripteur embarqué comprenant une pluralité de profils de communication (P) actifs, chaque profil de communication actif autorisant le terminal de communication à communiquer avec un réseau de téléphonie mobile respectif (R1, R2),
dans lequel le signal transporte une commande (CMD) comprenant un identifiant (ID) d'un profil de communication destinataire de ladite commande parmi lesdits profils de communication actifs, le signal étant **caractérisé en ce que** ladite commande est une commande APDU conforme à la norme ISO 7816-4, et dans lequel l'identifiant (ID) du profil destinataire est inclus dans l'octet de classe CLA défini par la norme ISO 7816-4.

12. Procédé de traitement mis en œuvre par un module d'identité de souscripteur embarqué (eUICC) coopérant avec un terminal de communication (T), comprenant des étapes de :
- maintien (A2) à l'état activé d'au moins deux profils de communication (P), dits profils de communication actifs, en même temps de sorte à ce que chaque profil de communication actif autorise le terminal de communication à communiquer avec un réseau de téléphonie mobile respectif (R1, R2) associé audit profil de communication ;
- réception (A10), depuis le terminal de communication (T), d'une commande (CMD) destinée à l'un des profils de communication (P) actifs, dit profil destinataire ; et
- détermination (A12) du profil destinataire parmi lesdits profils de communication actifs à partir d'un identifiant (ID) du profil destinataire inclus dans ladite commande,
le procédé étant **caractérisé en ce que** ladite commande est une commande APDU conforme à la norme ISO 7816-4, et dans lequel l'identifiant (ID) du profil destinataire est inclus dans l'octet de classe CLA défini par la norme ISO 7816-4.

13. Procédé d'envoi mis en œuvre par un dispositif (SR1 ; T) pour envoyer une commande (CMD) à un module d'identité de souscripteur embarqué (eUICC1) coopérant avec un terminal de communication (T), comprenant des étapes de :
- inclusion (C6 ; B30), dans une commande (CMD), d'un identifiant (ID) d'un profil de communication destinataire parmi une pluralité de profils (P) de communication actifs en même temps dans le module d'identité de souscripteur embarqué, chaque profil de communication actif autorisant le module d'identité de souscripteur embarqué à communiquer, via le terminal de communication, avec un réseau de téléphonie mobile respectif (R1, R2) ; et
- envoi de ladite commande, au terminal de communication (T), à destination du profil de communication (P) destinataire parmi la pluralité de profils actifs dans le module d'identité de souscripteur embarqué,
le procédé étant **caractérisé en ce que** ladite commande est une commande APDU conforme à la norme ISO 7816-4, et dans lequel l'identifiant (ID) du profil destinataire est inclus dans l'octet de classe CLA défini par la norme ISO 7816-4.

14. Programme d'ordinateur (OS1 ; OS2 ; OS3) comportant des instructions pour l'exécution des étapes d'un procédé selon la revendication 12 ou 13 lorsque ledit programme est exécuté par un ordinateur disposé au sein d'un module d'identité souscripteur embarqué (eUICC) ou d'un dispositif (SR1 ; T).

15. Support d'enregistrement lisible par un ordinateur disposé au sein d'un module d'identité souscripteur embarqué (eUICC) ou d'un dispositif (SR1 ; T), sur lequel est enregistré un programme d'ordinateur (PG1 ; PG2) comprenant des instructions pour l'exécution des étapes d'un procédé selon la revendication 12 ou 13.

## Patentansprüche

1. Eingebettetes Teilnehmeridentitätsmodul (eUICC1), das zum Zusammenwirken mit einem Kommunikationsendgerät (T) geeignet ist, umfassend:
- mehrere Kommunikationsprofile (P), wobei mindestens zwei der Kommunikationsprofile gleichzeitig aktiv sind, um zuzulassen, dass das Kommunikationsendgerät mit jedem Mobilfunknetzwerk (R1, R2), das den mindestens zwei aktiven Kommunikationsprofilen zugeordnet ist, kommuniziert,
- ein Empfangsmodul (M2) zum Empfangen eines Befehls (CMD), der eines der aktiven Kommunikationsprofile (P), das so genannte Empfängerprofil, als Empfänger aufweist, von dem Kommunikationsendgerät (T), und
- ein Bestimmungsmodul (M4) zum Bestimmen des Empfängerprofils aus den aktiven Kommunikationsprofilen anhand einer Kennung (ID) des Empfängerprofils, die in den Befehl eingebunden ist,
wobei das eingebettete Teilnehmeridentitätsmodul **dadurch gekennzeichnet ist, dass**
der Befehl ein APDU-Befehl ist, welcher der ISO-Norm 7816-4 entspricht, und wobei die Kennung (ID) des Empfängerprofils in das Oktett der CLA-Klasse eingebunden ist, das durch die ISO-Norm 7816-4 definiert ist.

2. Eingebettetes Teilnehmeridentitätsmodul nach Anspruch 1, das ein Verarbeitungsmodul (M6) zum Leiten des Befehls zu dem Empfängerprofil umfasst.

3. Eingebettetes Teilnehmeridentitätsmodul nach Anspruch 1 oder 2, wobei das Kommunikationsendgerät (T) mindestens eine Funkschnittstelle (INT) umfasst, wobei mindestens eines der aktiven Kommunikationsprofile Zugriff auf die mindestens eine Funkschnittstelle hat, um den Aufbau einer Kommunikation zwischen dem Kommunikationsendgerät und dem Mobilfunknetzwerk (R1, R2), das dem aktiven Kommunikationsprofil zugeordnet ist, zu ermöglichen.

4. Eingebettetes Teilnehmeridentitätsmodul nach einem der Ansprüche 1 bis 3, wobei die Kennung des Empfängerprofils auf der Basis des Bits 5 des Oktetts der CLA-Klasse codiert ist.

5. Eingebettetes Teilnehmeridentitätsmodul nach Anspruch 4, wobei das Bit 5 des Oktetts der CLA-Klasse zwischen einem ersten Zustand und einem zweiten Zustand wechseln kann, wobei das Bestimmungsmodul dazu ausgestaltet ist zu bestimmen, dass ein erstes aktives Kommunikationsprofil in dem eingebetteten Teilnehmeridentitätsmodul der Empfänger des Befehls ist, wenn das Bit 5 in dem ersten Zustand ist, und zu bestimmen, dass ein zweites aktives Kommunikationsprofil in dem eingebetteten Teilnehmeridentitätsmodul der Empfänger des Befehls ist, wenn das Bit 5 in dem zweiten Zustand ist, wobei das erste und zweite aktive Kommunikationsprofil sich voneinander unterscheiden.

6. Eingebettetes Teilnehmeridentitätsmodul nach einem der Ansprüche 1 bis 3, wobei die Kennung des Empfängerprofils auf der Basis der Bits 1 und 2 des Oktetts der CLA-Klasse codiert ist.

7. Eingebettetes Teilnehmeridentitätsmodul nach Anspruch 6, wobei die Bits 1 und 2 des Oktetts der CLA-Klasse zwischen einem ersten Zustand und einem zweiten Zustand wechseln können, wobei das Bestimmungsmodul (M4) dazu ausgestaltet ist, das Empfängerprofil anhand des Zustands zu bestimmen, in dem sich die Bits 1 und 2 in dem APDU-Befehl befinden.

8. Vorrichtung (SR1; T), die zum Senden eines Befehls (CMD) an ein eingebettetes Teilnehmeridentitätsmodul (eUICC1), das mit einem Kommunikationsendgerät (T) zusammenwirkt, geeignet ist, wobei die Vorrichtung umfasst:
- ein Sendemodul (M12) zum Senden des Befehls an eines von mehreren gleichzeitig aktiven Kommunikationsprofilen (P) in dem eingebetteten Teilnehmeridentitätsmodul, wobei jedes aktive Kommunikationsprofil zulässt, dass das Kommunikationsendgerät mit einem jeweiligen Mobilfunknetzwerk (R1, R2) kommuniziert, und
- ein Verarbeitungsmodul (M10), das dazu ausgestaltet ist, vor dem Senden des Befehls eine Kennung (ID) eines aktiven Empfängerkommunikationsprofils des Befehls einzubinden,
wobei die Vorrichtung **dadurch gekennzeichnet ist, dass**
der Befehl ein APDU-Befehl ist, welcher der ISO-Norm 7816-4 entspricht, und wobei die Kennung (ID) des Empfängerprofils in das Oktett der CLA-Klasse eingebunden ist, das durch die ISO-Norm 7816-4 definiert ist.

9. Vorrichtung nach Anspruch 8, wobei die Vorrichtung das Endgerät (T) oder ein entfernter Inhaltsverwaltungsserver ist, welcher der GSMA-Norm SGP.02 v3.0 entspricht.

10. System, umfassend:
- ein eingebettetes Teilnehmeridentitätsmodul (eUICC1) nach einem der Ansprüche 1 bis 7,
- ein Kommunikationsendgerät, das mit dem eingebetteten Teilnehmeridentitätsmodul zusammenwirkt, und
- mindestens eine Vorrichtung (SR1) nach den Ansprüchen 8 oder 9.

11. Signal, das von einer Vorrichtung (SR; T) an ein eingebettetes Teilnehmeridentitätsmodul (eUICC1), das mit einem Endgerät zusammenwirkt, abgegeben wird, wobei das eingebettete Teilnehmeridentitätsmodul mehrere aktive Kommunikationsprofile (P) umfasst und jedes aktive Kommunikationsprofil zulässt, dass das Kommunikationsendgerät mit einem jeweiligen Mobilfunknetzwerk (R1, R2) kommuniziert,
wobei das Signal einen Befehl (CMD) transportiert, der eine Kennung (ID) eines Empfängerkommunikationsprofils des Befehls von den aktiven Kommunikationsprofilen umfasst,
wobei das Signal **dadurch gekennzeichnet ist, dass**
der Befehl ein APDU-Befehl ist, welcher der ISO-Norm 7816-4 entspricht, und wobei die Kennung (ID) des Empfängerprofils in das Oktett der CLA-Klasse eingebunden ist, das durch die ISO-Norm 7816-4 definiert ist.

12. Verarbeitungsverfahren, das von einem eingebetteten Teilnehmeridentitätsmodul (eUICC), das mit einem Kommunikationsendgerät (T) zusammenwirkt, durchgeführt wird, umfassend die Schritte des:
- gleichzeitigen Haltens (A2) von mindestens zwei Kommunikationsprofilen (P), den so genannten aktiven Kommunikationsprofilen, in dem aktiven Zustand, so dass jedes aktive Kommunikationsprofil zulässt, dass das Kommunikationsendgerät mit einem jeweiligen Mobilfunknetzwerk (R1, R2), das dem Kommunikationsprofil zugeordnet ist, kommuniziert,
- Empfangens (A10) eines Befehls (CMD), der eines der aktiven Kommunikationsprofile (P), das so genannte Empfängerprofil, als Empfänger aufweist, von dem Kommunikationsendgerät (T), und
- Bestimmens (A12) des Empfängerprofils aus den aktiven Kommunikationsprofilen anhand einer Kennung (ID) des Empfängerprofils, die in den Befehl eingebunden ist,
wobei das Verfahren **dadurch gekennzeichnet ist, dass**
der Befehl ein APDU-Befehl ist, welcher der ISO-Norm 7816-4 entspricht, und wobei die Kennung (ID) des Empfängerprofils in das Oktett der CLA-Klasse eingebunden ist, das durch die ISO-Norm 7816-4 definiert ist.

13. Sendeverfahren, das von einer Vorrichtung (SR1; T) zum Senden eines Befehls (CMD) an ein eingebettetes Teilnehmeridentitätsmodul (eUICC1), das mit einem Kommunikationsendgerät (T) zusammenwirkt, durchgeführt wird, umfassend die Schritte des:
- Einbindens (C6; B30) einer Kennung (ID) eines Empfängerkommunikationsprofils von mehreren gleichzeitig aktiven Kommunikationsprofilen (P) in dem eingebetteten Teilnehmeridentitätsmodul in einen Befehl (CMD), wobei jedes aktive Kommunikationsprofil zulässt, dass das eingebettete Teilnehmeridentitätsmodul mittels des Kommunikationsendgeräts mit einem jeweiligen Mobilfunknetzwerk (R1, R2) kommuniziert, und
- Sendens des Befehls an das Kommunikationsendgerät (T) an das Empfängerkommunikationsprofil (P) von den mehreren aktiven Profilen in dem eingebetteten Teilnehmeridentitätsmodul,
wobei das Verfahren **dadurch gekennzeichnet ist, dass**
der Befehl ein APDU-Befehl ist, welcher der ISO-Norm 7816-4 entspricht, und wobei die Kennung (ID) des Empfängerprofils in das Oktett der CLA-Klasse eingebunden ist, das durch die ISO-Norm 7816-4 definiert ist.

14. Computerprogramm (OS1; OS2; OS3), das Anweisungen zur Ausführung von Schritten eines Verfahrens nach Anspruch 12 oder 13 umfasst, wenn das Programm von einem Computer ausgeführt wird, der sich innerhalb eines eingebetteten Teilnehmeridentitätsmoduls (eUICC) oder einer Vorrichtung (SR1; T) befindet.

15. Aufzeichnungsmedium, das von einem Computer lesbar ist, der sich innerhalb eines eingebetteten Teilnehmeridentitätsmoduls (eUICC) oder einer Vorrichtung (SR1; T) befindet, und auf welchem ein Computerprogramm (PG1; PG2), das Anweisungen zur Ausführung von Schritten eines Verfahrens nach Anspruch 12 oder 13 umfasst, aufgezeichnet ist.

## Claims

1. An embedded subscriber identity module (eUICC1) suitable for cooperating with a communication terminal (T), comprising:
- a plurality of communication profiles (P), at least two of said communication profiles being active at the same time so as to authorize the communication terminal to communicate with each mobile telephone network associated (R1, R2) with said at least two active communication profiles;
- a reception module (M2) for receiving, from the communication terminal (T), a command (CMD) intended for one of the active communication profiles (P), called recipient profile; and
- a determining module (M4) for determining the recipient profile from among the active communication profiles from an identifier (ID) of the recipient profile included in said command,
the embedded subscriber identity module being **characterized in that**
said command is an APDU command according to standard ISO 7816-4, and wherein the identifier (ID) of the recipient profile is included in the class byte CLA defined by standard ISO 7816-4.

2. The embedded subscriber identity module according to claim 1, comprising a processing module (M6) for directing the command toward said recipient profile.

3. The embedded subscriber identity module according to claim 1 or 2, wherein the communication terminal (T) comprises at least one radio interface (INT), at least one of the active communication profiles having access to said at least one radio interface in order to allow the establishment of the communication between the communication terminal and the mobile telephone network (R1, R2) associated with said active communication profile.

4. The embedded subscriber identity module according to any one of claims 1 to 3, wherein the identifier of the recipient profile is encoded based on bit 5 of the class byte CLA.

5. The embedded subscriber identity module according to claim 4, wherein bit 5 of the class byte CLA can switch between a first state and a second state, the determining module being configured to determine that a first active communication profile in the embedded subscriber identity module is the recipient of said command when bit 5 is in the first state, and to determine that a second active communication profile in the embedded subscriber identity module is the recipient of said command when bit 5 is in the second state, said first and second active communication profiles being separate from one another.

6. The embedded subscriber identity module according to any one of claims 1 to 3, wherein the identifier of the recipient profile is encoded based on bits 1 and 2 of the class byte CLA.

7. The embedded subscriber identity module according to claim 6, wherein bits 1 and 2 of the class byte CLA can each switch between a first state and a second state, the determining module (M4) being configured to determine the recipient profile from the state in which said bits 1 and 2 are found in the command APDU.

8. A device (SR1; T) able to send a command (CMD) to an embedded subscriber identity module (eUICC1) cooperating with a communication terminal (T), the device comprising:
- a sending module (M12) for sending the command to one from among a plurality of communication profiles (P) active at the same time in the embedded subscriber identity module, each active communication profile authorizing the communication terminal to communicate with a respective mobile telephone network (R1, R2); and
- a processing module (M10) configured to include, before sending the command, an identifier (ID) of an active communication profile receiving said command,
the device being **characterized in that**
said command is a command APDU according to standard ISO 7816-4, and wherein the identifier (ID) of the recipient profile is included in the class byte CLA defined by standard ISO 7816-4.

9. The device according to claim 8, wherein said device is the terminal (T) or a remote content management server according to standard GSMA SGP.02 v3.0.

10. A system comprising:
- an embedded subscriber identity module (eUICC1) according to any one of claims 1 to 7;
- a communication terminal cooperating with the embedded subscriber identity module; and
- at least one device (SR1) according to claims 8 or 9.

11. A signal sent by a device (SR1; T) to an embedded subscriber identity module (eUICC1) cooperating with a terminal, said embedded subscriber identity module comprising a plurality of active communication profiles (P), each active communication profile authorizing the communication terminal to communicate with a respective mobile telephone network (R1, R2),
wherein the signal transports a command (CMD) comprising an identifier (ID) of a recipient communication profile of said command among said active communication profiles,
the signal being **characterized in that**
said command is a command APDU according to standard ISO 7816-4, and wherein the identifier (ID) of the recipient profile is included in the class byte CLA defined by standard ISO 7816-4.

12. A processing method implemented by an embedded subscriber identity module (eUICC) cooperating with a communication terminal (T), comprising the following steps:
- keeping (A2) at least two communication profiles (P), called active communication profiles, in the activated state at the same time such that each active communication profile authorizes the communication terminal to communicate with a respective mobile telephone network (R1, R2) associated with said communication profile;
- receiving (A10), from the communication terminal (T), a command (CMD) intended for one of the active communication profiles (P), called recipient profile; and
- determining (A12) the recipient profile from among said active communication profiles from an identifier (ID) of the recipient profile included in said command,
the method being **characterized in that**
said command is a command APDU according to standard ISO 7816-4, and wherein the identifier (ID) of the recipient profile is included in the class byte CLA defined by standard ISO 7816-4.

13. A sending method implemented by a device (SR1; T) for sending a command (CMD) to an embedded subscriber identity module (eUICC1) cooperating with a communication terminal (T), comprising the following steps:
- including (C6; B30), in a command (CMD), an identifier (ID) of a recipient communication profile from among a plurality of active communication profiles (P) at the same time in the embedded subscriber identity module, each active communication profile authorizing the embedded subscriber identity module to communicate, via the communication terminal, with a respective mobile telephone network (R1, R2); and
- sending said command, to the communication terminal (T), intended for the recipient communication profile (P) from among the plurality of active profiles in the embedded subscriber identity module,
the method being **characterized in that**
said command is a command APDU according to standard ISO 7816-4, and wherein the identifier (ID) of the recipient profile is included in the class byte CLA defined by standard ISO 7816-4.

14. A computer program (OS1; OS2; OS3) including instructions for executing steps of a method according to claim 12 or 13 when said program is executed by a computer arranged within an embedded subscriber identity module (eUICC) or a device (SR1; T).

15. A computer-readable recording medium arranged within an embedded subscriber identity module (eUICC) or a device (SR1; T), on which a computer program (PG1; PG2) is recorded comprising instructions for executing steps of a method according to claim 12 or 13.
